# EUROPÄISCHE PATENTSCHRIFT

(11) **EP 0 960 764 B1**
(45) Veröffentlichungstag und Bekanntmachung des Hinweises auf die Patenterteilung: **23.07.2003**
(21) Anmeldenummer: 99101971.2
(22) Anmeldetag: 01.02.1999
(51) Int. Cl.: B60N 2/16

(54) **Vorrichtung zur Höhenverstellung eines Fahrersitzes**
Device for adjusting the height of a vehicle seat
Dispositif pour régler la hauteur d'un siège de véhicule

(30) Priorität: 29.05.1998 DE 19824182
(43) Veröffentlichungstag der Anmeldung: 01.12.1999
(73) Patentinhaber: Rheinmetall Landsysteme GmbH, 24159 Kiel (DE)
(72) Erfinder: Nowak, Harald, 24864 Goltoft (DE); Lüers, Broder, 24796 Bredenbek (DE); Hass, Frank, 24235 Wendtorf (DE); Thiesen, Theodor, 24107 Kiel (DE)
(74) Vertreter: Hansmann, Dierk, Dipl.-Ing.

(56) Entgegenhaltungen:
- EP-A- 0 054 948
- EP-A- 0 618 103
- DE-A- 2 307 183
- DE-A- 3 011 805
- DE-A- 19 532 025
- US-A- 3 625 563

## Beschreibung

Die Erfindung bezieht sich auf eine Vorrichtung zur Höhenverstellung eines Fahrersitzes, insbesondere für ein gepanzertes Fahrzeug, zur Anpassung an verschiedene Körpergrößen von Fahrern in Bezug auf die Einblickhöhe von Winkelspiegelperiskopen und einer direkten Sicht durch Fahrzeugfenster mit gleichzeitiger Abstandseinstellung von Fußbedienpedalen zum Fahrersitz und zur Anpassung an die Körpergröße (siehe z.B. DE-A-2 307 183, dem Oberbegriff entsprechend).

Bei gepanzerten Fahrzeugen ist es besonders wichtig, daß der Fahrersitz höhenverstellbar ist, damit körperlich unterschiedlich große Fahrer zur Erfüllung ihrer Aufgaben mit ihren Augen in der Höhe optimal zum Einblickfenster eines Winkelspiegelperiskopes sitzen.

Dieses ist besonders wichtig, da ansonsten die Sichtmöglichkeit über die Winkelspiegel unzulässig eingeschränkt wird. Mit dem Winkelspiegel wird die Fahrersicht unter Panzerschutz durch das gepanzerte Fahrzeugdach auf die Fahrbahn ermöglicht. Andererseits muß der Fahrer auch nach dem Öffnen einer über ihm angebrachten Luke und nach einer Sitzverstellung nach oben mit freier Sicht aus der Luke das Fahrzeug fahren können. Auch deshalb wird eine vertikale Sitzverstellung vorgesehen.

Für eine Fahrzeugbedienung sind auch Fußbedienpedalen, wie Gas- und Bremspedal erforderlich. Bei körperlich unterschiedlich großen Fahrern ist es erforderlich, die Fußpedale in ihrer Lage und Entfernung zum Fahrersitz ebenfalls einzustellen, damit eine sichere Bedienung des Fahrzeugs erreicht wird. Dies kann durch eine waagerechte Verstellung des Sitzes in Relation zum Fußpedal erfolgen, wie es beim Pkw bekannt ist. Bei gepanzerten Fahrzeugen ist eine entsprechende Verstellung der Pedaleinrichtung nur schwer durchführbar, da der Fahrersitz bei diesen Fahrzeugen keine oder nur eine begrenzte waagerechte Verstellung besitzt, welches durch die Lage des Sitzes zu feststehenden Einrichtungen wie Winkelspiegel oder Dachluke begründet ist.

Es ist bekannt, die Einstellung des Fahrerplatzes, die Sitzhöhenverstellung und die Einstellung der Pedalerie in Relation zum Sitz, auf unterschiedliche Weise und meist getrennt vorzunehmen, Diese Einstellungen sind zeitaufwendig und behindern die Durchführung des Fahrens beim Übergang auf Fahren mit freier Sicht vom Fahren über die Winkelspiegel und umgekehrt oder bei Fahrerwechsel zwischen zwei unterschiedlich großen Fahrern.

Bei der Bedingung für eine Fahrergröße zwischen 5 und 95 Perzentil (statistische Körpergrößen im Bereich von 5% bis 95% der männlichen Bevölkerung) muß beispielsweise die Fahrersitzhöhe um ca. 275mm vertikal verstellbar sein.

Zusätzlich ist es bei gleicher Bedingung erforderlich, die Pedaleinrichtung gegen den Fahrersitz um ca. 25mm vertikal und um ca. 140mm horizontal einzustellen, um den Fahrersitz optimal an die Beinlänge des Fahrers anzupassen.

Aufgabe der Erfindung ist es, eine Vorrichtung für gattungsgemäße Anordnungen zu schaffen, die eine einfache, sichere und schnelle Einstellung des Fahrersitzes in Bezug auf unterschiedliche Fahrergrößen und Fahrersichteinrichtungen gewährleistet.

Die Lösung dieser Aufgabe erfolgt erfindungsgemäß durch die kennzeichnenden Merkmale des Anspruches 1.

Weitere vorteilhafte Ausgestaltungen sind durch die Merkmale der Unteransprüche gekennzeichnet.

Die erzielten Vorteile bestehen darin, daß durch eine gleichzeitige und kombinierte Verstellung der Sitzhöhe und des Fußpedalabstandes für alle Körpergrößen der Fahrer eine Fahrt über den Winkelspiegel als auch mit freier Sicht erreicht wird.

Diese kombinierte Einstellung ist möglich, da ein kleiner Fahrer immer mit dem Sitz in einer oberen Stellung und mit geringem Abstand der Pedalerie zum Sitz fährt, während ein großer Fahrer immer in einer unteren Sitzstellung und mit großem Abstand zwischen Pedalerie und Sitz fährt, so daß ein geometrischer Zusammenhang zwischen Sitzhöhen- und Pedalabstandseinstellung gegeben ist und mit einer Verstellung gemäß der Vorrichtung erfindungsgemäß beide Einstellungen vorgenommen werden können.

Durch die erfindungsgemäße Vorrichtung wird ein Fahrersitzrahmen bzw. ein Hubgestell vertikal in fahrzeugfesten Schienen verschoben und ist in jeder Stellung arretierbar. Damit ein Pedalträger entsprechend mitgenommen werden kann, ist mit dem Sitzrahmen eine Mitnehmerschiene verbunden, auf der eine Mitnehmerrolle verschieblich gelagert ist.

Der Pedalträger ist vorzugsweise mit zwei Anlenkungen versehen, die beispielsweise in zwei fahrzeugfeste schräggestellte Führungsschienen einseitig eingreifen und in diesen verschieblich gelagert sind.

Bei einer Sitzhöhenverstellung wird somit der Pedalträger mitsamt der Bedienpedale über die Mitnehmerrolle mitbewegt und aufgrund der schräggestellten Führungsschienen in seiner Höhe und in seinem Seitenabstand zum Sitzrahmen entsprechend der gewünschten Geometrie gleichzeitig eingestellt.

Durch die zum Sitz schräg geneigten Führungsschienen nimmt der Pedalträger in einer oberen Position eine nähere Stellung zum Sitz ein als bei einer unteren Position. In jedem Fall verbleibt der Pedalträger bei einer Verstellung in einer horizontalen Lage, was aufgrund der Anlenkungen, die in die parallel liegenden Führungsschienen eingreifen, gewährleistet ist.

Damit eine veränderte Grundeinstellung des Pedalträgers gegenüber dem Sitz möglich wird, kann die Mitnehmerschiene entsprechend um einen Winkel verstellt werden.

In gleicher Weise wie die Fußpedale, kann auch ein Lenkrad bzw. eine Anzeigeinstrumententafel mittels Führungsschienen und Anlenkungen mit dem Fahrersitz in der Höhe und/oder längsverschieblich mit eingestellt werden.

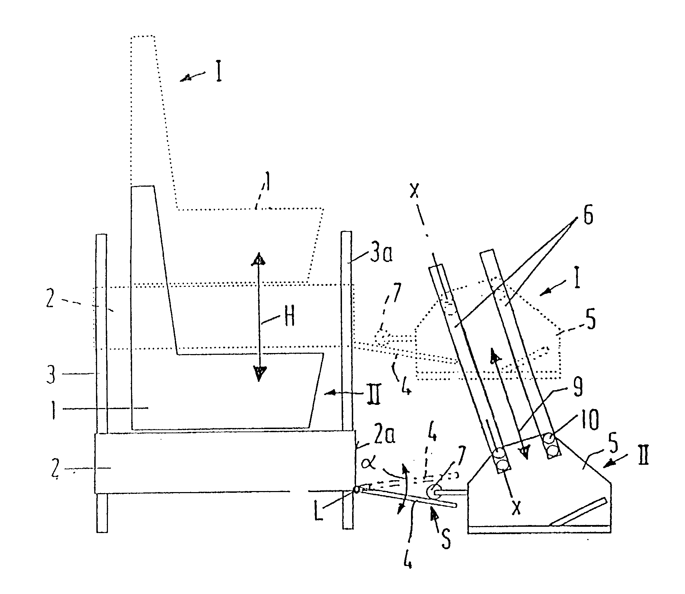

Ein Ausführungsbeispiel der Erfindung ist in der Zeichnung schematisch dargestellt, wobei die eine Vorrichtung zum Verstellen eines Fahrersitzes mit zugeordneten Pedalträgern in einer Seitenansicht gezeigt ist.

Die Vorrichtung zur Höhenverstellung besteht im wesentlichen aus einem auf einem Hubgestell 2 angeordneten Sitz 1, der über Führungsschienen 3, 3a in der Höhe verstellbar ist, wobei in der Zeichnung in ausgezogenen Linien eine untere Sitzposition I und in gepunkteten Linien eine mögliche obere Sitzposition II gezeigt ist.

Vor dem Sitz 1 ist ein Pedalträger 5 angeordnet, der die Pedalerie trägt. Der Sitz 1 ist mit dem Pedalträger 5 über eine Stelleinrichtung S verbunden, welche eine Mitnehmerschiene 4 am Sitzhubgestell 2 und eine Mitnehmerrolle 7 am Pedalträger 5 aufweist. Durch diese Stelleinrichtung S wird eine zwangsweise Mitnahme des Pedalträgers 5 bei einer Verstellung des Sitzes 1 erzielt.

Der Fahrersitz 1 wird mittels des Hubgestells 2 in den seitlichen Führungsschienen 3, 3a vertikal in Pfeilrichtung H verschoben und kann in den einzelnen Stellungen arretiert werden. An einer Vorderseits 2a des Sitzhubgestelles 2 ist die Mitnehmerschiene 4 vorragend angeordnet und in einem Lager L mit waagerechter Achse einstellbar gehalten. Die Neigung der Mitnehmerschiene 4 kann um einen Winkel α eingestellt und in jeder eingestellten Stellung arretiert werden.

Ein nach unten geschlossener Pedalträger 5 ist in mindestens einer seitlichen fahrzeugfesten und schräg zum Fahrersitz 1 angebrachten Führungsschiene 6 über ein Kulissenelement 10 verschieblich in den Pfeilrichtungen 9 gelagert.

Mit dem Pedalträger 5 ist die Mitnehmerrolle 7 verbunden, die auf der Mitnehmerschiene 4 geführt ist. Durch entsprechende Ausformung der Führungsschienen 6 wird ein seitliches Herausfallen des Pedalträgers 5 aus den Führungsschienen 6 vermieden.

Bei einer Verstellung des Hubgestells 2 in Pfeilrichtung H wird der Pedalträger 5 mittels der Verbindung zwischen der Mitnehmerschiene 4 und der Mitnehmerrolle 7 vom Hubgestell 2 mitgenommen und verstellt sich zwangsweise in Pfeilrichtungen 9. Hierdurch wird der Pedalträger 5 in einer oberen Position 1 relativ näher an den Sitz 1 herangestellt als in einer unteren Position 11, in welcher der Pedalträger 5 weiter vom Sitz entfernt angeordnet ist,

Die Verstellung der Mitnehmerschiene 4 um einen Winkel α erlaubt die Einstellung eines Verstellgrades bzw. des Mitnahmeeffekts für den Pedalträger 5 in Bezug auf die Sitzhubeinstellung.

Der Sitz 2 kann aus der unteren Sitzposition I manuell oder beispielsweise mit einem elektrischen Antrieb in die obere Position II und zurück verstellt werden. Die Führungsschienen 3,3a für das Sitzhubgestell 2 sind beispielsweise seitlich des Gestells 2 parallel und vertikal angeordnet. Die Führungsschienen 6 für den Pedalträger 5 erstrecken sich in einer zum Sitz 2 hin geneigten Schrägebene X-X, so daß der Pedalträger 5 in Abhängigkeit der Schrägstellung der Führungsschienen 6 eine bestimmte Position zum Sitz 2 einnehmen kann. Desweiteren ist durch die Einstellung der Mitnehmerschiene 4 im Bereich des Winkels α noch die Lage des Pedalträgers 5 zum Sitz 2 in seiner Grundposition einstellbar.

## Patentansprüche

1. Vorrichtung zur Höhenverstellung eines Fahrersitzes, insbesondere für ein gepanzertes Fahrzeug, zur Anpassung an verschiedene Körpergrößen von Fahrern in Bezug auf die Einblickhöhe von Winkelspiegelperiskopen und einer direkten Sicht durch Fahrzeugfenster mit gleichzeitiger Abstandseinstellung von Fußbedienpedalen zum Fahrersitz und zur Anpassung an die Körpergröße, wobei die Vorrichtung einen höhenverstellbaren Fahrersitz (1) sowie einen Pedalträger (5) für Fußbedienpedale aufweist, der (5) - bei einer Höhenverstellung des Sitzes (1) - mit den Fußbedienpedalen zum Sitz (1) entlang einer zum Sitz geneigten schrägen Ebene (X-X) in angepaßte horizontale Positionen (I,II) einstellbar ist, **dadurch gekennzeichnet, daß** ein Hubgestell (2) mit dem Fahrersitz (1) in fahrzeugfesten Schienen (3,3a) höhenverstellbar geführt ist und das Hubgestell (2) eine Mitnehmerschiene (4) für den Pedalträger (5) aufweist, der über eine mit der Mitnehmerschiene (4) korrespondierende Mitnehmerrolle (7) in Eingriff steht und über eine fahrzeugfeste Führung (6) verschiebbar geführt ist.

2. Vorrichtung nach Anspruch 1, **dadurch gekennzeichnet, daß** die Mitnehmerschiene (4) am Hubgestell (2) in einem Lager (L) mit horizontaler Achse um einen Winkel (α) einstellbar ist.

3. Vorrichtung nach Anspruch 1 oder 2, **dadurch gekennzeichnet, daß** die Mitnehmerschiene (4) U-profilförmig ausgebildet ist, wobei die Schenkel des U-Profils eine Vertikalführung der Mitnehmerrolle (7) durchführen.

4. Vorrichtung nach einem der Ansprüche 1 bis 3, **dadurch gekennzeichnet, daß** der Pedalträger (5) über Kulissenelemente (10) mit fahrzeugfesten Führungsschienen (6) in Eingriff stehen.

5. Vorrichtung nach einem der Ansprüche 1 bis 4, **dadurch gekennzeichnet, daß** eine Höhenverstellung des Hubgestells (2) des Sitzes (1) über Antriebe einstellbar ist.

6. Vorrichtung nach einem der Ansprüche 1 bis 5, **dadurch gekennzeichnet, daß** weitere Fahrerbedienelemente, wie ein Lenkrad, mit einer Sitzverstellung über eine verbindende Einrichtung zusätzlich einstellbar angeordnet sind.

7. Vorrichtung nach einem der Ansprüche 1 bis 6, **dadurch gekennzeichnet, daß** der Pedalträger (5) als Auflageplatte für die Füße ausgebildet ist und das Hubgestell (2) an einer Seitenwand des Fahrzeugs geführt ist.

## Claims

1. A device for height adjustment of a driver's seat, in particular for an armoured vehicle, for adaptation to different driver body sizes with regard to the viewing height of angled mirror periscopes and a direct line of sight through vehicle windows with simultaneous adjustment of the distance between the foot pedals and the driver's seat and for adaptation to body size, the device comprising a height-adjustable driver's
seat (1) and a pedal support (5) for the foot pedals, which (5), in the event of height-adjustment of the seat (1), may be adjusted with the foot pedals relative to the seat (1) along an oblique plane (X-X) inclined relative to the seat into adapted horizontal positions (I, II), **characterised in that** a lifting frame (2) is guided height-adjustably with the driver's seat (1) in rails (3, 3a) fixed to the vehicle and the lifting frame (2) comprises a carrier rail (4) for the pedal support (5), which is in engagement via a carrier roller (7) corresponding to the carrier rail (4) and is guided displaceably via a guide (6) fixed to the vehicle.

2. A device according to claim 1, **characterised in that** the carrier rail (4) on the lifting frame (2) may be adjusted in a bearing (L) with a horizontal axis by an angle (α).

3. A device according to claim 1 or claim 2, **characterised in that** the carrier rail (4) takes the form of a U profile, wherein the legs of the U profile effect vertical guidance of the carrier roller (7).

4. A device according to one of claims 1 to 3, **characterised in that** the pedal support (5) is in engagement via sliding elements (10) with guide rails (6) fixed to the vehicle.

5. A device according to one of claims 1 to 4, **characterised in that** height adjustment of the lifting frame (2) of the seat (1) may be established via drives.

6. A device according to one of claims 1 to 5, **characterised in that** others of the driver's operating elements, such as a steering wheel, are additionally arranged so as to be adjustable with seat adjustment via a linking apparatus.

7. A device according to one of claims 1 to 6, **characterised in that** the pedal support (5) takes the form of a support plate for the feet and the lifting frame (2) is guided on a side wall of the vehicle.

## Revendications

1. Dispositif de déplacement en hauteur d'un siège de conducteur, en particulier pour un véhicule à chenilles, afin de s'adapter à diverses corpulences des conducteurs par rapport à la hauteur d'observation de périscopes goniométriques à miroir et à une vision directe par la fenêtre du véhicule en réglant simultanément la distance des pédales de commande par rapport au siège du conducteur et à la corpulence, le dispositif présentant un siège de conducteur réglable en hauteur (1) ainsi qu'un support de pédales (5) pour les pédales de commande, ledit support (5) pouvant, lors d'un déplacement en hauteur du siège (1) avec les pédales de commande, être réglé, par rapport au siège (1), le long d'un plan oblique (X-X) incliné par rapport au siège (1), dans des positions horizontales adaptées (I, II), **caractérisé en ce qu'**un châssis de levage (2) est guidé de manière à pouvoir se déplacer en hauteur avec le siège de conducteur (1) dans des rails (3, 3a) fixés au véhicule et **en ce que** le châssis de levage (2) présente un rail d'entraînement (4) pour le support de pédales (5), qui est en prise avec un galet d'entraînement (7) correspondant au rail d'entraînement (4) et est guidé en translation sur une coulisse (6) fixée au véhicule.

2. Dispositif selon la revendication 1, **caractérisé en ce que** le rail d'entraînement (4) monté sur le châssis de levage (2) peut être réglé selon un angle (α) dans un palier (L) à axe horizontal.

3. Dispositif selon la revendication 1 ou 2, **caractérisé en ce que** le rail d'entraînement (4) est conformé en profilé en U, dont les branches assurent un guidage vertical du galet d'entraînement (7).

4. Dispositif selon l'une quelconque des revendications 1 à 3, **caractérisé en ce que** le support de pédales (5) est en prise avec des rails de guidage (6) fixés au véhicule via des éléments de coulissement (10).

5. Dispositif selon l'une quelconque des revendications 1 à 4, **caractérisé en ce qu'**un déplacement en hauteur du châssis de levage (2) du siège (1) peut être réglé via des commandes.

6. Dispositif selon l'une quelconque des revendications 1 à 5, **caractérisé en ce que** d'autres éléments du commande du conducteur, tels qu'un volant de direction, sont agencés également de manière à pouvoir être réglés lors d'un déplacement du siège via un dispositif de liaison.

7. Dispositif selon l'une quelconque des revendications 1 à 6, **caractérisé en ce que** le support de pédales (5) se présente sous la forme d'une plaque d'appui pour les pieds et le châssis de levage (2) est guidé sur une paroi latérale du véhicule.
